# EUROPEAN PATENT APPLICATION

(11) **EP 2 682 374 A1**
(43) Date of publication of application: **08.01.2014**
(21) Application number: 12752344.7
(22) Date of filing: 27.02.2012
(51) Int. Cl.: C03C 3/089, C03B 27/00, C03C 3/091, C03C 3/093

(54) **TEMPERED GLASS PLATE**

(30) Priority: 28.02.2011 JP 2011041772
(71) Applicant: Asahi Glass Company, Limited, Tokyo 100-8405 (JP)
(72) Inventor: KOIKE, Akio, Tokyo 100-8405 (JP); ITO, Setsuro, Tokyo 1008405 (JP)
(74) Representative: Müller-Boré & Partner Patentanwälte
(86) International application number: PCT/JP2012/054821
(87) International publication number: WO 2012/118029

(57) **Abstract**

The present invention provides a glass plate to be tempered, which has a low thermal expansion coefficient, a high surface compression stress due to physical reinforcements and a low density and is excellent in the scratch durability.

A glass plate to be tempered which comprises, by mass% as represented by the following composition:
SiO₂: 55 to 85%,
B₂O₃: 2 to 12%,
MgO: 0.1 to 12%,
CaO: 0.1 to 12%,
Na₂O: 0 to 13%,
MgO+CaO+SrO+ZnO: 3 to 16% and
Al₂O₃: 0 to 3% and,

which can be tempered by heating and quenching.

## Description

### TECHNICAL FIELD

The present invention relates to a glass plate to be tempered at a level of conventional soda-lime glass or higher without increasing the thermal expansion coefficient at room temperature.

### BACKGROUND ART

Tempered glass solves a problem that glass is fragile and thereby is currently used for vehicles and buildings. The tempered glass in the present invention is tempered glass utilizing heat shrinkage of glass so called heat reinforcement or physical reinforcement and means tempered glass for windows of vehicles and automobiles, such as cars, trucks, buses, trains, ships and aircrafts, tempered glass used for headlights and taillights, tempered glass used for windows, doors and show windows of buildings and houses, tempered glass used for furniture or office supplies such as partitions, desktops, bookshelves or showcases, or tempered glass used for cookware or consumer electronics.

Tempered glass for vehicles and buildings is produced by a heat reinforcement method wherein a glass plate produced by a float method is heated to a softening point or a vicinity of a deformation point and then quenched by blowing air on its surface.

In this method, heat shrinkage of glass at a time of cooling is utilized, a glass surface is cooled first, and the glass surface shrinks. Then, the inside of the glass shrinks. Thus, the compression stress remains in the glass surface, whereby the strength of the glass is improved. Further, since the compression stress remains in the surface of the tempered glass, effects obtained that scratches are prevented from spreading, and the scratch durability is improved.

In recent year, when tempered glass is used as glass for high-rise buildings or vehicles, it is desired to reduce weight of glass itself. The weight reduction of glass can be accomplished by lowering a density. However, in general, soda lime silicate glass produced by a float method and used as a glass plate to be tempered has a density of about 2.5 g/cm³ at room temperature, and silicate glass has a density of about 2.2 g/cm³. Thus there is a limitation to reduce the density.

On the other hand, the weight reduction of glass can be accomplished by thinning the thickness of glass. However, in such a case, there is a problem of the deterioration of the strength of thin glass. Further, when tempering glass, glass is tempered by utilizing the difference of temperature between a surface of glass and its inside at a time of cooling. Thus, in a case of glass having a thickness of at most 2.8 mm, the difference of temperature tends to be small, and thereby it is difficult to substantially improve the strength of glass.

Further, a glass plate to be tempered is desired to have a large temperature difference between a temperature at the vicinity of a deformation point where tempering by air quenching starts and a temperature at the vicinity of a strain point where deformation is frozen for smoothly proceeding temper. However, such glass has a large thermal expansion coefficient from a low temperature and thereby is not appropriate in applications in which a low thermal expansion coefficient is desired.

To solve these problems, the following Patent Document 1 discloses tempered glass having a low density but can be easily tempered equivalent to conventional soda lime glass and is excellent in the scratch durability.

### PRIOR ART DOCUMENT

### PATENT DOCUMENT

Patent Document 1: JP-A-9-124338

### DISCLOSURE OF INVENTION

### TECHNICAL PROBLEM

Patent document 1 discloses glass having a low density but can be tempered at a level of conventional soda lime glass. However, tempering a thin glass plate is not described, and glass having a low thermal expansion coefficient is not described.

The present invention provides a glass plate which has a low thermal expansion coefficient, has a high initiation stress by physical reinforcement, is thin and can be sufficiently tempered.

### SOLUTION TO PROBLEM

The present invention is a glass plate to be tempered which comprises, by mass percentage as represented by the following oxides:

| | |
|---|---|
| SiO₂: | 55 to 85%, |
| B₂O₃: | 2 to 12%, |
| MgO: | 0.1 to 12%, |
| CaO: | 0.1 to 12%, |
| Na₂O: | 0 to 13%, |
| MgO+CaO+SrO+ZnO: | 3 to 16% and |
| Al₂O₃: | 0 to 3% and, |

which can be tempered by heating and quenching.

Further, the present invention is a glass plate to be tempered which comprises, by mass percentage as represented by the following oxides:

| | |
|---|---|
| SiO₂: | 55 to 85%, |
| B₂O₃: | 2 to 12%, |
| MgO: | 0.1 to 12%, |
| CaO: | 0.1 to 12%, |
| Na₂O: | 0 to 13%, |
| MgO+CaO+SrO+ZnO: | 3 to 12% and |
| Al₂O₃: | 0 to 3% and, |

which can be tempered by heating and quenching.

Further, the present invention is a glass plate to be tempered which comprises, by mass percentage as represented by the following oxides:

| | |
|---|---|
| SiO₂: | 60 to 80%, |
| B₂O₃: | 2 to 10%, |
| MgO: | 0.5 to 8%, |
| CaO: | 2 to 12%, |
| Na₂O: | 2 to 12%, |
| K₂O: | 0.5 to 10%, |
| MgO+CaO+SrO+ZnO: | 3 to 14%, |
| Al₂O₃: | 0 to 1.5% and |
| Fe₂O₃: | 0.01 to 1.0%, and |

which can be tempered by heating and quenching.

Further, the present invention is a glass plate to be tempered, which has an average thermal expansion coefficient of less than 100×10⁻⁷/°C at from 50 to 350°C and a density of less than 2.50 g/cm³ at room temperature.

Further, the present invention is a glass plate to be tempered, which has a crack initiation load of at least 1,500 gf in vacuum. Here, the crack initiation load is the lowest load in Vickers' loads that the probability of the crack formation becomes 100%, when Vickers indenters are drove into a surface of a glass plate.

Further, the present invention is a glass plate to be tempered, which has a thermal expansion coefficient of at least 250×10⁻⁷/°C at a temperature in the middle of the glass transition point and the deformation point.

Further, the present invention is a glass plate to be tempered, wherein a value obtained by dividing the thermal expansion coefficient at a temperature in the middle of the glass transition point and the deformation point by an average thermal expansion coefficient at from 50 to 350°C, is at least 4.0.

Further, the present invention is a glass plate to be tempered, which is produced by any one of a float method, a fusion method, a down load method and a roll out method.

Further, the present invention is a tempered glass plate which is obtained by subjection the above glass plate to be tempered to tempering treatment by heating at a temperature higher than the glass transition point of the glass plate, followed by quenching.

The expression " to " showing the above numerical range is used to include the numerical values before and after thereof as the lower limit value and the upper limit value, and hereinafter in this specification, "to" is used to have the same meaning unless otherwise specified.

### ADVANTAGEOUS EFFECTS OF INVENTION

According to the present invention, a glass plate to be tempered which has a low density, is excellent in the scratch durability and has a high surface compression stress due to physical reinforcement and a low thermal expansion coefficient at from 50 to 350°C, and a tempered glass plate can be obtained.

### DESCRIPTION OF EMBODIMENTS

The glass plate of the present invention has an average thermal expansion coefficient of less than 100×10⁻⁷/°C at from 50 to 350°C. If the average thermal expansion coefficient is at least 100×10⁻⁷/°C, various problems may result depending on applications of tempered glass. For example, in production steps of a glass plate, the change in dimension due to the difference of temperature becomes large, and thereby defects tend to occur. Further, if the temperature is quickly risen from a low temperature, tensile stress results on a glass surface, and glass is easily broken. The preferred range of the average thermal expansion coefficient is less than 90×10⁻⁷/°C. In applications desired to reduce the change in dimension in a heating step such as an application for electronics such as a display, the average thermal expansion coefficient is preferably less than 80×10⁻⁷/°C, particularly preferably less than 75×10⁻⁷/°C.

Further, the glass plate of the present invention preferably has an average thermal expansion coefficient of at least 30×10⁻⁷/°C at from 50 to 350°C. If the thermal expansion coefficient is less than 30×10⁻⁷/°C, stress due to tempering by air quenching may not be high. The average thermal expansion coefficient is more preferably at least 60×10⁻⁷/°C, particularly preferably 70×10⁻⁷/°C.

The glass plate of the present invention has a density of less than 2.50 g/cm³ at room temperature. If the density is at least 2.50 g/cm³, the glass itself is heavy. Further, since glass having a low density has a low thermal conductivity, stress tends to be generated at a time of tempering. The density is preferably less than 2.46 g/cm³, more preferably less than 2.43 g/cm³, further preferably less than 2.40 g/cm³.

Now, each composition of the glass plate of the present invention will be described.

The content of SiO₂ in the glass plate of the present invention is at least 55 wt%. If the content of SiO₂ is less than 55 wt%, problems result such that the density of glass becomes high, the thermal expansion coefficient becomes high, and the scratch durability becomes poor. The content of SiO₂ is preferably at least 60 mass%, more preferably at least 65 mass%, particularly preferably at least 70 mass%. Further, in the glass plate of the present invention, the content of SiO₂ is at most 85 mass%. If the content of SiO₂ exceeds 85 mass%, the viscosity becomes high, and thereby the glass is difficult to melt. The content of SiO₂ is preferably at most 80 mass%.

In the glass of the present invention, the content of B₂O₃ is at least 2 mass%. The present inventors have found that when glass contains a specific amount of B₂O₃, the thermal expansion coefficient will not be so high at room temperature, the thermal expansion coefficient becomes high at a temperature of at least the glass transition point, and the difference of temperature between the strain point and the deformation point becomes large. Thus, even though the thermal expansion coefficient is not high at room temperature, a glass plate to be tempered at a level higher than conventional soda lime glass can be obtained.

The reason why the above effects can be obtained is considered that at a time of tempering by air quenching, the difference of temperature between the temper starting temperature and the strain point is made to be large, and stress caused by the difference of temperature is made to be large. The content of B₂O₃ is preferably at least 5 mass%, particularly preferably at least 8 mass%. Further, in the glass plate of the present invention, the content of B₂O₃ is at most 12 mass%. If the content of B₂O₃ exceeds 12 mass%, problems result such that glass easily causes phase separation, and thereby the chemical durability of glass becomes poor, etc. Further, an alkali borate evaporates at a time of melting glass, and it is difficult to obtain uniform quality glass. The content of B₂O₃ is preferably at most 10 mass%, more preferably at most 8 mass%.

In the glass plate of the present invention, the content of MgO is at least 0.1 mass%. MgO is necessary to maintain an appropriate thermal expansion coefficient of glass and improves the scratch durability of glass. The content of MgO is preferably at least 0.5 mass%, more preferably at least 1.0 mass%, further preferably at least 1.5 mass%. Further, in the glass plate of the present invention, the content of MgO is at most 12 mass%. If the content of MgO exceeds 12 mass%, the thermal expansion coefficient of glass becomes excessively high. The content of MgO is preferably at most 10 mass%, more preferably at most 8 mass%, further preferably at most 6 mass%.

In the glass plate of the present invention, the content of CaO is at least 0.1 mass%. CaO is necessary to maintain an appropriate thermal expansion coefficient of glass. The content of CaO is preferably at least 1 mass%, more preferably at least 2 mass%, further preferably at least 3 mass%. In the glass plate of the present invention, the content of CaO is at most 12 mass%. If the content of CaO exceeds 12 mass%, the thermal expansion coefficient of glass becomes excessively high. The content of CaO is preferably at most 10 mass%, more preferably at most 8 mass%.

In the glass plate of the present invention, the content of Na₂O is at most 13 mass%. If the content of Na₂O exceeds 13 mass%, the difference of temperature between the strain point and the deformation point becomes small, and thereby tempering stress becomes small. Further, a problem results that the thermal expansion coefficient becomes too high. The content of Na₂O is preferably at most 12.5 mass%, more preferably at most 12 mass%. Further, Na₂O is a component to make the thermal expansion coefficient high even though the density of glass is low. Thus, Na₂O is contained in the glass composition in order to control the thermal expansion coefficient. The content of Na₂O is preferably at least 2 mass%, more preferably at least 5 mass%.

In the glass plate of the present invention, the total of MgO, CaO, SrO and ZnO, namely MgO+CaO+SrO+ZnO, is at least 3 mass%. If MgO+CaO+SrO+ZnO is less than 3 mass%, it is necessary to add a large amount of an alkali such as Li₂O, Na₂O and K₂O in the composition in order to maintain a melting property at a high temperature and an appropriate thermal expansion coefficient, and thereby the difference of temperature between the strain point and deformation point becomes small, and tempering stress becomes small. Further, a problem results that the thermal expansion coefficient becomes too high. MgO+CaO+SrO+ZnO is preferably at least 5 mass%, more preferably at least 6 mass%. Further, in the glass plate of the present invention, MgO+CaO+SrO+ZnO is at most 16 mass%. If MgO+CaO+SrO+ZnO exceeds 16 mass%, the density of glass becomes too high, and the thermal expansion coefficient is becomes high. MgO+CaO+SrO+ZnO is preferably at most 14 mass%, more preferably at most 12 mass%, further preferably at most 11 mass%, particularly preferably at most 10 mass%. Here, containing MgO+CaO+SrO+ZnO in the above range means that at least one selected from the group consisting of MgO, CaO, SrO and ZnO is contained, and it is not necessary to contain all of MgO, CaO, SrO and ZnO.

In the glass plate of the present invention, the content of Al₂O₃ is at most 3 mass%. If the content of Al₂O₃ exceeds 3 mass%, the thermal expansion coefficient tends not to be high at a temperature of at least the glass transition point or above, and thereby it may be difficult to make stress high. The content of Al₂O₃ is preferably at most 1.5 mass%, more preferably at most 1.0 mass%.

In the glass plate of the present invention, the content of K₂O is preferably at most 10 mass%. If the content of K₂O exceeds 10 mass%, the difference of temperature between the strain point and the deformation point becomes small, and tempering stress becomes small. Further, a problem results that the thermal expansion coefficient becomes too high. The content of K₂O is more preferably at most 8 mass%, particularly preferably at most 5 mass%. Further, K₂O may not be contained, however, it is preferred to contain K₂O to maintain the melting property of glass at a high temperature and an appropriate thermal expansion coefficient. The content of K₂O is more preferably at least 0.5 mass% particularly preferably at least 1 mass%.

In the glass plate of the present invention, SrO may be contained. By adding SrO, the melting property of glass at a high temperature and the thermal expansion coefficient can be controlled. In a case where SrO is contained, the content of SrO is preferably at least 0.1 mass%, more preferably at least 1 mass%, further preferably at least 2 mass%. In the glass plate of the present invention, the content of SrO is preferably at most 10 mass%. If the SrO exceeds 10 mass%, the density of glass increases, and thereby the weight of glass increases. The content of SrO is more preferably at most 8 mass%, further preferably at most 6 mass%.

In the glass plate of the present invention, BaO may be contained. By adding BaO, the melting property of glass at a high temperature and the thermal expansion coefficient can be controlled. On the other hand, if BaO is contained, the density of glass increases, and thereby the weight of glass increases. Further, glass becomes fragile, the crack initiation load becomes small, and glass is easily scratched. Therefore, the content of BaO is preferably at most 6 mass%, more preferably at most 4 mass%, further preferably at most 2 mass%. Particularly, in order to make the crack initiation load high, BaO is preferably at most 1 mass%, more preferably at most 0.5 mass%.

In the glass plate of the present invention, ZnO may be contained. By adding ZnO, the Young's modulus of glass can be increased. On the other hand, if ZnO is contained, the devitrification property of glass deteriorates, and it is difficult to carry out continuous production of a glass plate such as a float method. Therefore, the content of ZnO is preferably at most 3 mass%, more preferably at most 1 mass%, further preferably at most 0.5 mass%.

In the glass plate of the present invention, SnO₂ may be contained. By adding SnO₂, the Young's modulus of glass can be increased, and the clarification property of glass can be improved. On the other hand, if SnO₂ is contained, the devitrification property of glass deteriorates, and it is difficult to carry out continuous production of a glass plate such as a float method. Therefore, the content of SnO₂ is preferably at most 3 mass%, more preferably at most 1 mass%, further preferably at most 0.5 mass%.

In the glass plate of the present invention, Li₂O may be contained. In a case where Li₂O is contained, the content of Li₂O is preferably at most 6 mass%. If the content of Li₂O exceeds 6 mass%, the difference of temperature between the strain point and the deformation point becomes small, and thereby tempering stress becomes small. Further, the devitrification property of glass deteriorates, and it is difficult to carry out continuous production of a glass plate such as a float method. The content of Li₂O is more preferably at most 4 mass%, further preferably at most 3 mass%, particularly preferably at most 1.5 mass%.

In a case where Li₂O and/or K₂O is contained in the glass plate of the present invention, the total of Li₂O, Na₂O and K₂O (Li₂O+Na₂O+K₂O) is preferably at most 16 mass%. If Li₂O+Na₂O+K₂O exceeds 16 mass%, the difference of temperature between the strain point and the deformation point becomes small, and thereby tempering stress may be small. Further, a problem results that the thermal expansion coefficient becomes too high. Li₂O+Na₂O+K₂O is more preferably at most 13 mass%, further preferably at most 12 mass%.

In the glass plate of the present invention, Fe may be contained. In a case where Fe is contained, the content of Fe is preferably at least 0.01 mass% as calculated as Fe₂O₃. Fe is a component to absorb heat radiation, and thereby heat convection of molten glass is accelerated, whereby the homogeneity of glass is improved. Further, Fe has an effect to prevent blocks of a melting furnace from being high temperature, whereby the life span of the furnace can be extended. Thus, in a process for melting a plate glass by using a large size furnace, Fe is preferably contained in the composition. If the content of Fe as calculated as Fe₂O₃ is less than 0.01 mass%, the production by using a large size furnace may be difficult. The content of Fe is more preferably at least 0.02 mass%, particularly preferably at least 0.05 mass%. On the other hand, in the glass plate of the present invention, the content of Fe as calculated as Fe₂O₃ is preferably at most 1.0 mass%. If the content of Fe exceeds 1.0 mass%, it is difficult to use glass for vehicles and buildings due to coloration. The content of Fe is more preferably at most 0.5 mass%.

The glass plate of the present invention basically comprises the above components, however, so long as the object of the present invention is not impaired, other components may be contained up to the total of 10 mass%. As such other components, BaO, ZrO₂, TiO₂, Y₂O₃ or CeO₂ may, for example, be contained. Further, as a clearer at a time of melting glass, SO₃, a chloride, a fluoride, a halogen, SnO₂, Sb₂O₃ or As₂O₃ may appropriately be contained. Further, for adjusting color, Ni, Co, Cr, Mn, V, Se, Au, Ag or Cd may be contained.

The glass plate of the present invention preferably contains no arsenic and antimony substantially. Since arsenic and antimony are poisonous, in order to prevent effects on environments, it is preferred that they are not contained in glass. In the present invention, substantially not containing means less than 0.01 mass%.

The glass plate of the present invention preferably has a glass transition point of at most 700°C. In a case where a tempered glass plate is produced by subjecting a glass plate to tempering treatment (for example, tempering by air quenching), a glass plate is heated to a temperature of at least its glass transition point and quenched. If the glass transition temperature exceeds 700°C, it is necessary to heat glass to a high temperature for tempering treatment, and peripheral members such as members for holding the glass plate, etc. are exposed to a high temperature, and thereby the life span of such peripheral members is remarkably lowered, or expensive members which are excellent in the heat resistance are required. The glass transition point is more preferably at most 650°C. Further, the glass transition point is preferably at least 400°C. If the glass transition point is less than 400°C, it is difficult to form the temperature difference at a time of tempering treatment by heating and quenching, and thereby tempering stress may be small. The glass transition point is more preferably at least 450°C, further preferably at least 500°C.

The glass plate of the present invention preferably has a deformation point of at least 640°C. If the deformation point is less than 640°C, the tempering starting temperature becomes low, and tempering stress may be small. The sag temperature is more preferably at least 660°C. Further, the glass plate of the present invention preferably has a sag temperature of at most 750°C. If the sag temperature exceeds 750°C, a high temperature is required for tempering treatment, and peripheral members such as members for holing glass are exposed to a high temperature, the life span of the peripheral members is remarkably lowered, or expensive members which are excellent in the heat resistance are required. The deformation point is more preferably at most 700°C.

The glass plate of the present invention preferably has a thermal expansion coefficient of at least 250×10⁻⁷/°C at a temperature in the middle of the glass transition point and the deformation point. If the thermal expansion coefficient is less than 250×10⁻⁷/°C, tempering stress may be small. The thermal expansion coefficient is preferably at least 300×10⁻⁷/°C, more preferably 350×10⁻⁷/°C, further preferably 380x ×10⁻⁷/°C. Here, the thermal expansion coefficient at a temperature in the middle of the glass transition point and the deformation point is a thermal expansion coefficient at a temperature of (Ts+Tg)/2 where the temperature of the glass transition point of a glass plate to be tempered is Tg (°C), and the temperature of its deformation point is Ts (°C).

The glass plate of the present invention preferably has a value (αₕ/α) obtained by dividing the thermal expansion coefficient (αₕ) at a temperature in the middle of the glass transition point and the deformation point by an average thermal expansion coefficient (α) at from 50 to 350°C, of at least 4.0. That is, if the above value is less than 4.0, tempering stress may be small. The above value is preferably at least 5.0. In order to increase tempering stress in glass having a lower thermal expansion coefficient, the above value is more preferably at least 6.0, further preferably at least 7.0.

The thermal expansion coefficient, the glass transition point and the deformation point are measured by the following methods.

An average thermal expansion coefficient α at from 50 to 350°C, a glass transition point, a deformation point and an thermal expansion coefficient αₕ in the middle of the glass transition point and the deformation point were obtained by preparing a columnar sample having a diameter of 5 mm and a length of 20 mm and measuring by using a thermal dilatometer at a temperature rising rate of 5°C/min.

The glass plate of the present invention preferably has a plate thickness of at least 1.3 mm. If the plate thickness is less than 1.3 mm, tempering stress may not be large. The plate thickness is more preferably at least 1.6 mm, further preferably at least 1.9 mm.

The glass plate of the present invention is produced by any one method of glass plate forming methods such as a float method, a fusion method, a download method and a rollout method. By the float method, mass production of a plate glass having a plate thickness of at least 1.3 mm and a large area can be easily carried out, and the deviation of the plate thickness can be easily reduced, such being preferred.

Now, the scratch durability of glass will be explained. Glass which is excellent in the scratch durability has a high Vickers hardness and a high crack initiation load. In tempered glass which is produced by tempering treatment in which glass is heated and then quenched, the scratch durability of glass depends on heat history of glass, and the scratch durability remarkably varies depending on the tempering step. In the usual production step of tempered glass by air quenching, quenching is carried out by blowing air to heated glass from nozzles uniformly arranged, and thereby the difference of the scratch durability results between parts directly under the nozzles and the other parts.

Accordingly, the scratch durability of the glass plate of the present invention was evaluated by using a slowly cooled glass plate before tempering, specifically a glass plate held at a temperature of higher than a glass transition point by about 30°C for at least 1 hour and then slowly cooled to room temperature at a cooling rate of 1°C/min.

The glass plate of the present invention preferably has a Vickers hardness of at least 450. If the Vickers hardness is less than 450, concaves are easily formed by contact with an object, and scratches are easily formed. The Vickers hardness is more preferably at least 500, particularly preferably at least 520.

The glass plate of the present invention preferably has a crack initiation load of at least 1,500 gf in vacuum. The crack initiation load represents a load where the crack formation probability is 50%. The crack formation probability is a probability where cracks are formed at all points of four Vickers indentations. In a case where cracks are formed at all points, the crack number is 4, and the formation probability corresponds to 100%. If the crack initiation load is low, cracks are easily formed by contact with an object, and the strength tends to be low. The crack initiation low is preferably at least 1,600 gf, more preferably at least 1,800 gf, particularly preferably at least 2,000 gf.

The crack initiation load in vacuum is measured as described below. Vickers indenters are pressed on a glass surface for 15 seconds in vacuum by a Vickers hardness tester, followed by removing the Vickers intenders, and then the pressed parts are observed. In a case of normal glass, cracks are formed at four pressed corners. If a crack is formed only at one corner, the crack formation probability is 25%, if cracks are formed only two corners, the crack formation probability is 50%, if cracks are formed only three corners, the crack formation probability is 75%, and if cracks are formed at all four corners, the crack formation probability is 100%. The crack formation probability is measured by using plural test samples. Then, the crack formation load is plotted on a horizontal line, and the crack formation probability is plotted on a vertical line, and a Vickers load when the crack formation probability is 50% is obtained, and its value is crack initiation load. The higher this value is, the less cracks are formed, and glass is less likely to be broken.

A glass plate to be tempered made of the glass plate of the present invention preferably has a Young's modulus of at least 60 GPa. When the Young's modulus is at least 60 GPa, an effect is obtained such that the break durability is easily improved. The Young's modulus is more preferably at least 65 GPa, further preferably at least 70 GPa, particularly preferably at least 75 GPa.

A glass plate to be tempered made of the glass plate of the present invention preferably has a photoelastic coefficient of at most 3.5×10⁻⁷ cm²/kg. If the photoelastic coefficient exceeds 3.5×10⁻⁷ cm²/kg, when the tempered glass is used as a cover glass for a display, or the brightness is controlled by polarization, discoloration tends to occur. The photoelastic coefficient is more preferably at most 3.2×10⁻⁷ cm²/kg.

### EXAMPLES

Now, the present invention will be described in detail with reference to Examples. However, it should be understood that the present invention is by no means restricted to such specific Examples.

Conventionally used glass materials such as oxides, hydroxides, carbonates and nitrates were appropriately selected so as to be the glass compositions represented by mass% shown in Tables 1 and 2, weighed so as to be 300 g as glass and mixed. Then, the mixture was put into a platinum crucible. The platinum crucible was put in an electrical resistance heating type electric furnace at 1,600°C, and the mixture was melted for 3 hours, defoamed and homogenized. Then, the mixture was flown into a mold, maintained at a temperature of higher than the glass transition point by about 30°C for 1 hour, and then slowly cooled to room temperature at cooling rate of 1°C/min to prepare slowly cooled glass as a sample.

In conformity with JIS R 3103-3:2001, a columnar sample having a diameter of 5 mm and a length of 20 mm was produced from glass produced above, and a glass transition point was obtained by measuring at a temperature rising rate of 5°C/min by using a thermal dilatometer (TD5010SA, manufactured by BruckerAXS K.K.). Further, a deformation point was obtained from the same data.

In conformity with JIS R 1618:2002, an average thermal expansion coefficient α at a temperature of 50 to 350°C of glass produced above was obtained by similarly to the measurement of the glass transition point, using a thermal dilatometer (TD5010SA, manufactured by BruckerAXS K.K.) and measuring at a temperature rising rate of 5°C/min. Further, a thermal expansion coefficient αₕ at a temperature in the middle of the glass transition point and the deformation point was obtained from the same data.

A sample having a thickness of about 10 mm was produced by polishing the produced glass so that both surfaces of the glass plate of 4 cm × 4 cm would be in parallel, a density was obtained by the Archimedes' method, and a Young's modulus was obtained by supersonic wave pulse method.

A sample having a size of about 20 mm × about 20 mm × thickness of about 1 mm and mirror polished top and bottom surfaces was produced from the produced glass. The sample was polished and slowly cooled again under the above slowly cooling condition in a dried nitrogen atmosphere. Intenders of Vickers hardness tester were pressed on the surface of the obtained slowly cooled glass in vacuum to evaluate the scratch resistance and breakage, and a crack initiation load was obtained. Further, the Vickers hardness was obtained from an indentation at 100 gf.

Tables 1 and 2 show the obtained physical property values. Examples 1 to 3 and Examples 6 to 11 are Working Examples, and Examples 4 and 5 are Comparative Examples. In Example 5, the composition is the same as soda lime silica glass which is usually used for a window glass plate.

In order to evaluate the easiness of tempering by air quenching, stress generated by heating and quenching was measured. First, disks having a size of a diameter of 20 mm and a thickness of 5 mm and of which all surfaces are mirror surfaces was produced from the slowly cooled glass of Examples 1 to 5. By using the produced disks, a photoelastic coefficient was obtained by the disk compression method. Next, each of the disk samples was hung by using a wire made of platinum in a platinum crucible and held at a temperature higher than the glass transition point by 125°C for 10 minutes. Here, the used platinum crucible has a pipe shape having a diameter of 6 cm and a height of about 10 cm. The glass was punt in at the almost center of the platinum crucible. After heating, the glass contained in the crucible was taken out, and the glass was quenched by quenching the crucible in air atmosphere. A retardation of the produced quenched glass was measured by a deformation tester (manufactured by TOSHIBA CORPORATION). Further, by dividing the retardation value by the above mentioned photoelastic coefficient, initiation stress was obtained. Table 1 shows the obtained results. With respect to the glass of Examples 6 to 11, the initiation stress was estimated from the calculation of the physical values of the obtained glass.

In Example 1 and Examples 6 to 9, the average thermal expansion coefficient α at a temperature of from 50 to 350°C was smaller than that in Example 5 of which the composition was the same as soda lime silica glass usually used for a window glass plate, while the initiation stress generated by heating and quenching was high. Further, the thermal expansion coefficient α in Example 2 and Example 10 was about 2/3 of that in Example 5, while the initiation stress generated by heating and quenching was equivalent to that in Example 5. Further, the thermal expansion coefficient α in Example 3 and Example 11 was about half of that in Example 5, while the initiation stress generated by heating and quenching was higher than 2/3 of the initiation stress in Example 5. Further, in Examples 1 to 3 and Examples 6 to 11, the density was lower than that in Example 5, and the scratch durability was superior to Example 5. In Example 4, the density was low, however, the scratch durability was inferior, and the initiation stress generated by heating and quenching was also low.

**TABLE 1**

| Ex. | 1 | 2 | 3 | 4 | 5 |
|---|---|---|---|---|---|
| SiO₂ | 74.4 | 76.6 | 78.8 | 80.1 | 72.2 |
| Al₂O₃ | 1.9 | 2.0 | 2.2 | 2.3 | 1.8 |
| B₂O₃ | 3.2 | 6.4 | 9.5 | 11.5 | 0.0 |
| Li₂O | 0.0 | 0.0 | 0.0 | 0.0 | 0.0 |
| Na₂O | 10.8 | 8.5 | 6.3 | 4.9 | 13.1 |
| K₂O | 0.3 | 0.2 | 0.1 | 0.0 | 0.5 |
| MgO | 2.9 | 1.9 | 1.0 | 0.4 | 3.9 |
| CaO | 6.5 | 4.3 | 2.2 | 0.9 | 8.6 |
| SrO | 0.0 | 0.0 | 0.0 | 0.0 | 0.0 |
| ZrO₂ | 0.0 | 0.0 | 0.0 | 0.0 | 0.0 |
| MgO+CaO+SrO+ZnO | 9.4 | 6.2 | 3.2 | 1.3 | 12.5 |
| Li₂O+Na₂O+K₂O | 11.1 | 8.7 | 6.4 | 4.9 | 13.6 |
| Fe (calculated as Fe₂O₃) | 0.07 | 0.07 | 0.12 | 0.12 | 0.07 |
| α (×10⁻⁷/°C) | 73.5 | 61.5 | 40.4 | 26.7 | 91.5 |
| Glass transition point (°C) | 585 | 587 | 570 | 554 | 568 |
| Deformation point (°C) | 648 | 667 | 708 | 687 | 629 |
| αₕ (×10⁻⁷/°C) | 399 | 338 | 295 | 173 | 360 |
| αₕ/α | 5.4 | 5.5 | 7.3 | 6.5 | 3.9 |
| Density (g/cm³) | 2.45 | 2.39 | 2.33 | 2.26 | 2.49 |
| Vickers hardness | 520 | 530 | 530 | 510 | 500 |
| Young's modulus (GPa) | 76.0 | 76.0 | 73.2 | 68.3 | 74.2 |
| Crack initiation load (gf) | 1550 | 2000 | 1800 | 1350 | 1350 |
| Photoelastic coefficient (×10⁻⁷ cm²/kg) | 2.9 | 3.1 | 3.4 | 3.7 | 2.6 |
| Retardation (nm/cm) | 860 | 860 | 740 | 460 | 730 |
| Initiation stress (MPa) | 30.1 | 28.0 | 22.2 | 12.8 | 29.3 |

**TABLE 2**

| Ex. | 6 | 7 | 8 | 9 | 10 | 11 |
|---|---|---|---|---|---|---|
| SiO₂ | 70.4 | 67.3 | 65.9 | 72.1 | 74.0 | 76.3 |
| Al₂O₃ | 1.2 | 0.7 | 1.4 | 0.8 | 0.7 | 0.6 |
| B₂O₃ | 3.3 | 7.7 | 5.4 | 7.4 | 6.9 | 7.8 |
| Li₂O | 0.0 | 1.2 | 0.0 | 0.0 | 0.0 | 0.0 |
| Na₂O | 11.1 | 5.1 | 11.9 | 8.1 | 6.1 | 5.1 |
| K₂O | 0.8 | 8.9 | 3.1 | 3.1 | 3.1 | 2.2 |
| MgO | 2.0 | 1.3 | 4.7 | 2.0 | 2.4 | 2.8 |
| CaO | 11.3 | 7.8 | 7.5 | 6.4 | 6.1 | 4.6 |
| SrO | 0.0 | 0.0 | 0.0 | 0.0 | 0.0 | 0.3 |
| ZrO₂ | 0.0 | 0.0 | 0.1 | 0.0 | 0.1 | 0.1 |
| MgO+CaO+SrO+ZnO | 13.3 | 9.1 | 12.2 | 8.4 | 9.1 | 7.8 |
| Li₂O+Na₂O+K₂O | 11.8 | 14.0 | 15.0 | 11.2 | 9.2 | 7.4 |
| Fe (calculated as Fe₂O₃) | 0.10 | 0.10 | 0.20 | 0.20 | 0.05 | 0.05 |
| α (×10⁻⁷/°C) | 81.9 | 83.3 | 89.9 | 71.3 | 59.8 | 49.0 |
| Glass transition point (°C) | 584 | 547 | 563 | 587 | 593 | 589 |
| Deformation point (°C) | 655 | 617 | 627 | 661 | 679 | 722 |
| αₕ (×10⁻⁷/°C) | 420 | 505 | 510 | 397 | 365 | 294 |
| αₕ/α | 5.1 | 6.1 | 5.7 | 5.6 | 6.1 | 6.0 |
| Density (g/cm³) | 2.51 | 2.48 | 2.34 | 2.46 | 2.43 | 2.39 |
| Vickers hardness | 580 | 620 | 580 | 580 | 610 | 610 |
| Crack initiation load (gf) | 1500 | 1500 | 1600 | 2000 | 1800 | Higher than 2000 |
| Photoelastic coefficient (×10⁻⁷ cm²/kg) | 2.9 | 3.1 | 2.9 | 3.2 | 3.2 | 3.3 |
| Retardation (nm/cm) | 940 | 1280 | 1170 | 1010 | 950 | 790 |
| Initiation stress (MPa) | 32.7 | 40.8 | 40.7 | 31.5 | 29.6 | 23.7 |

### INDUSTRIAL APPLICABILITY

The glass plate of the present invention is used as tempered glass for windows of vehicles such as automobiles, trucks, buses, trains, ships and aircrafts, tempered glass for headlights and taillights, tempered glass for buildings such as window of buildings and houses, doors and show windows, tempered glass for furniture such as partitions, desktops, bookshelves, and showcases and office supplies and tempered glass for home electronics such as cooking apparatus.

The entire disclosure of Japanese Patent Application No. 2011-041772 filed on February 28, 2011 including specification, claims and summary is incorporated herein by reference in its entirety.

## Claims

1. A glass plate to be tempered which comprises, by mass percentage as represented by the following oxides:
| | |
|---|---|
| SiO₂: | 55 to 85%, |
| B₂O₃: | 2 to 12%, |
| MgO: | 0.1 to 12%, |
| CaO: | 0.1 to 12%, |
| Na₂O: | 0 to 13%, |
| MgO+CaO+SrO+ZnO: | 3 to 16% and |
| Al₂O₃: | 0 to 3% and, |
which can be tempered by heating and quenching.

2. A glass plate to be tempered which comprises, by mass percentage as represented by the following oxides:
| | |
|---|---|
| SiO₂: | 55 to 85%, |
| B₂O₃: | 2 to 12%, |
| MgO: | 0.1 to 12%, |
| CaO: | 0.1 to 12%, |
| Na₂O: | 0 to 13%, |
| MgO+CaO+SrO+ZnO: | 3 to 12% and |
| Al₂O₃: | 0 to 3% and, |
which can be tempered by heating and quenching.

3. A glass plate to be tempered which comprises, by mass percentage as represented by the following oxides:
| | |
|---|---|
| SiO₂: | 60 to 80%, |
| B₂O₃: | 2 to 10%, |
| MgO: | 0.5 to 8%, |
| CaO: | 2 to 12%, |
| Na₂O: | 2 to 12%, |
| K₂O: | 0.5 to 10%, |
| MgO+CaO+SrO+ZnO: | 3 to 14%, |
| Al₂O₃: | 0 to 1.5% and |
| Fe₂O₃: | 0.01 to 1.0%, and |
which can be tempered by heating and quenching.

4. The glass plate to be tempered according to any one of Claims 1 to 3, which has an average thermal expansion coefficient of less than 100×10⁻⁷/°C at from 50 to 350°C and a density of less than 2.50 g/cm³ at room temperature.

5. The glass plate to be tempered according to any one of Claims 1 to 4, which has a crack initiation load of at least 1,500 gf in vacuum.

6. The glass plate to be tempered according to any one of Claims 1 to 5, which has a thermal expansion coefficient of at least 250×10⁻⁷/°C at a temperature in the middle of a glass transition point and a deformation point.

7. The glass plate to be tempered according to any one of Claims 1 to 6, wherein a value obtained by dividing the thermal expansion coefficient at a temperature in the middle of the glass transition point and the deformation point by the average thermal expansion coefficient at from 50 to 350°C, is at least 4.0.

8. The glass plate to be tempered according to any one of Claims 1 to 7, which has the average thermal expansion coefficient of at least 30×10⁻⁷/°C and less than 100× 10⁻⁷/°C at from 50 to 350°C.

9. The glass plate to be tempered according to any one of Claims 1 to 8, which is produced by any one of a float method, a fusion method, a down load method and a roll out method.

10. A tempered glass plate which is obtained by subjection the glass plate to be tempered as defined in any one of Claims 1 to 8 to tempering treatment by heating at a temperature higher than the glass transition point of the glass plate, followed by quenching.
